# EUROPÄISCHE PATENTANMELDUNG

(11) **EP 1 611 866 A1**
(43) Veröffentlichungstag der Anmeldung: **04.01.2006**
(21) Anmeldenummer: 05014019.3
(22) Anmeldetag: 29.06.2005
(51) Int. Cl.: A61C 13/273

(54) **Vorrichtung zur lösbaren Befestigung von Zahnersatzteilen, Zahnersatzteil mit einer solchen Vorrichtung sowie Verfahren zur Montage eines Riegels an einem Zahnersatzteil**

(30) Priorität: 30.06.2004 DE 202004010302 U; 11.04.2005 DE 102005016642
(71) Anmelder: Günter Rübeling Zahntechnisches Laboratorium GmbH & Co. KG, 27580 Bremerhaven (DE)
(72) Erfinder: Rübeling, Günter, 27580 Bremerhaven (DE)
(74) Vertreter: Eisenführ, Speiser & Partner

(57) **Zusammenfassung**

Beschrieben werden eine Vorrichtung zur lösbaren Befestigung von Zahnersatzteilen (22, 24) aneinander, ein Zahnersatzteil (24) mit einer eine Öffnung (28a) nach außen aufweisenden Ausnehmung (28) und einer derartigen Vorrichtung, sowie ein Verfahren zur Montage eines Riegels (1) an einem Zahnersatzteil (24), wobei der Riegel (1) zur lösbaren Befestigung dieses Zahnersatzteils (24) an einem anderen Zahnersatzteil (22) zwischen einer geöffneten Stellung und einer geschlossenen Stellung, in der er in eine in dem anderen Zahnersatzteil (22) ausgebildete Ausnehmung (26) eingreift, bewegbar angeordnet ist. Hierzu wird der Riegel (1) in einem in Bewegungsrichtung des Riegels (1) zumindest abschnittsweise offenen Gehäuse (20) beweglich angeordnet, im Zahnersatzteil (22) eine Ausnehmung (28) ausgebildet, die eine Öffnung (28a) nach außen aufweist, und das Gehäuse (20) mit dem darin beweglich angeordneten Riegel (1) in die Ausnehmung (28) des Zahnersatzteils (24) durch deren Öffnung (28a) eingesetzt. Demnach besteht das Besondere der Erfindung darin, dass der Riegel (1) zumindest teilweise in einem zum Einsetzen in die Ausnehmung (28) des einen Zahnersatzteils (24) durch deren Öffnung (28a) ausgebildeten und in Bewegungsrichtung des Riegels (1) zumindest abschnittsweise offenen Gehäuse (20) angeordnet und dabei in diesem beweglich gelagert wird.

## Beschreibung

Die Erfindung betrifft eine Vorrichtung zur lösbaren Befestigung von Zahnersatzteilen aneinander, mit einem Riegel, der für eine bewegliche Lagerung in einer in dem einen Zahnersatzteil ausgebildeten Ausnehmung, welche eine Öffnung nach außen aufweist, und in einer geschlossenen Stellung für den Eingriff in eine in dem anderen Zahnersatzteil ausgebildete Ausnehmung vorgesehen ist. Ferner betrifft die Erfindung ein Zahnersatzteil mit einer eine Öffnung nach außen aufweisenden Ausnehmung und einer derartigen Vorrichtung. Schließlich betrifft die Erfindung ein Verfahren zur Montage eines Riegels an einem Zahnersatzteil, wobei der Riegel zur lösbaren Befestigung dieses Zahnersatzteils an einem anderen Zahnersatzteil zwischen einer geöffneten Stellung und einer geschlossenen Stellung, in der er in eine in dem anderen Zahnersatzteil ausgebildete Ausnehmung eingreift, bewegbar angeordnet ist.

Eine solche Vorrichtung, ein solches Zahnersatzteil und/oder ein solches Verfahren sind beispielsweise aus der DE 33 12 908 A1, DE 35 04 162 A1, DE 35 27 936 A1, DE 40 29 147 C1 und DE 42 09 421 C1 bekannt. Der in diesem Stand der Technik verwendete Riegel ist dabei so ausgebildet, dass er über einen Gelenkstift an dem einen Zahnersatzteil, bei dem es sich gewöhnlich um ein sogenanntes Sekundärteil handelt, schwenkbar gelagert ist und in der geschlossenen Stellung in eine Ausnehmung des anderen Zahnersatzteils eingreift, bei dem es sich gewöhnlich um ein festsitzendes sogenanntes Primärteil handelt.

Während der Herstellung der Zahnersatateile wird in dem einen Zahnersatzteil die Ausnehmung für die Aufnahme und Lagerung des Riegels und in dem anderen Zahnersatzteil die Ausnehmung für den Eingriff des Riegels in der geschlossenen Stellung eingearbeitet. Dabei müssen diese Ausnehmungen so hergestellt werden, dass sie an die Form des verwendeten Riegels angepasst sind, um zum einen eine passgenaue Lagerung des Riegels an dem einen Zahnersatzteil und zum anderen einen passgenauen Eingriff des Riegels an dem anderen Zahnersatzteil in der geschlossenen Stellung zu gewährleisten. Denn Toleranzen bei der Lagerung und dem Eingriff des Riegels in der geschlossenen Stellung sind unbedingt zu vermeiden, da ansonsten eine sichere Befestigung der Zahnersatzteile aneinander nicht gewährleistet werden kann. Wird ein Riegel verwendet, der über einen Gelenkstift an dem einen Zahnersatzteil schwenkbar gelagert ist, muss zusätzlich in diesem Zahnersatzteil eine entsprechende Bohrung im Bereich der Ausnehmung eingearbeitet werden; dabei ist unbedingt darauf zu achten, dass eine mögliche Fehlorientierung des Gelenkstiftes ausgeschlossen wird. Vorzugsweise wird für ein solches Herstellungsverfahren die Funkenerosionstechnologie eingesetzt. Ein solches Verfahren zur Herstellung von Zahnersatzteilen, die über einen schwenkbaren Riegel miteinander lösbar befestigt sind, unter Ausbildung von an die Form des verwendeten Riegels angepassten Ausnehmungen ist beispielsweise in der DE 40 29 148 C1 beschrieben.

Zwar haben sich die Vorrichtung und das Verfahren der zuvor beschriebenen Art im täglichen Einsatz bislang gut bewärt; jedoch ist es Aufgabe der vorliegenden Erfindung, die Vorrichtung, das Zahnersatzteil sowie das Verfahren der eingangs genannten Art so zu modifizieren, dass sich die Ausbildung der Ausnehmung für die Aufnahme des Riegels in dem einen Zahnersatzteil während dessen Herstellung noch weiter vereinfachen lässt.

Diese Aufgabe wird gemäß einem ersten Aspekt der vorliegenden Erfindung gelöst durch eine Vorrichtung zur lösbaren Befestigung von Zahnersatzteilen aneinander, mit einem Riegel, der für eine bewegliche Lagerung in einer in dem einen Zahnersatzteil ausgebildeten Ausnehmung, welche eine Öffnung nach außen aufweist, und in einer geschlossenen Stellung für den Eingriff in eine in dem anderen Zahnersatzteil ausgebildete Ausnehmung vorgesehen ist, dadurch gekennzeichnet, dass der Riegel zumindest teilweise in einem zum Einsetzen in die Ausnehmung des einen Zahnersatzteils durch deren Öffnung ausgebildeten und in Bewegungsrichtung des Riegels zumindest abschnittsweise offenen Gehäuse angeordnet und dabei in diesem beweglich gelagert ist.

Ferner wird die Aufgabe gemäß einem zweiten Aspekt der vorliegenden Erfindung gelöst durch ein Zahnersatzteil mit einer eine Öffnung nach außen aufweisenden Ausnehmung und der zuvor beschriebenen Vorrichtung, dadurch gekennzeichnet, dass das Gehäuse mit dem darin beweglich angeordneten Riegel in die Ausnehmung durch deren Öffnung eingesetzt ist.

Schließlich wird gemäß einem dritten Aspekt der vorliegenden Erfindung vorgeschlagen ein Verfahren zur Montage eines Riegels an einem Zahnersatzteil, wobei der Riegel zur lösbaren Befestigung dieses Zahnersatztells an einem anderen Zahnersatzteil zwischen einer geöffneten Stellung und einer geschlossenen Stellung, in der er in eine in dem anderen Zahnersatzteil ausgebildete Ausnehmung eingreift, bewegbar angeordnet ist, gekennzeichnet durch die Schritte, den Riegel in einem in Bewegungsrichtung des Riegels zumindest abschnittsweise offenen Gehäuse beweglich anzuordnen, im Zahnersatzteil eine Ausnehmung auszubilden, die eine Öffnung nach außen aufweist, und das Gehäuse mit dem darin beweglich angeordneten Riegel in die Ausnehmung des Zahnersatzteils durch deren Öffnung einzusetzen.

Mit Hilfe der Erfindung erfolgt die bewegliche Lagerung des Riegels nicht mehr direkt an dem einen Zahnersatzteil, bei dem es sich gewöhnlich um das Sekundärteil handelt sondern in einem zusätzlich vorgesehenen Gehäuse, welches dann in der Ausnehmung dieses Zahnersatzteils zu befestigen ist, indem das Gehäuse mit dem darin beweglich gelagerten Riegel in die Ausnehmung des Zahnersatzteils durch deren Öffnung eingesetzt wird. Dabei kann die Ausnehmung vorzugsweise so ausgebildet sein, dass das Gehäuse mit dem darin sitzenden Riegel seitlich in die Ausnehmung gesteckt und dort beispielsweise mit Hilfe von Kleber (Komposit) fixiert wird.

Der Vorteil der erfindungsgemäßen Konstruktion besteht darin, dass bei der Herstellung der Ausnehmung in dem einen Zahnersatzteil besondere oder zusätzliche Maßnahmen für die Lagerung des in die Ausnehmung aufzunehmenden Riegels nicht getroffen werden müssen. Vielmehr sind solche besonderen oder zusätzlichen Maßnahmen im Gegensatz zum Stand der Technik nicht mehr erforderlich. Dies wird erfindungsgemäß dadurch erreicht, dass die Lagerung nun von dem Gehäuse übernommen wird, in dem der Riegel angeordnet ist.

Selbstverständlich muss die Form der Ausnehmung in dem einen Zahnersatzteil nun an die Form des Gehäuses angepasst sein, um einen sicheren Sitz des Gehäuses in der Ausnehmung zu gewährleisten. Jedoch kann im Gegensatz zum Riegel, insbesondere wenn dieser über einen Gelenkstift schwenkbar gelagert ist, dem Gehäuse eine geometrisch einfachere Form gegeben werden, was in vorteilhafter Weise zu einer weiteren Vereinfachung bei der Ausbildung der Ausnehmung während der Herstellung der Zahnersatzteile führt.

Als weiteren Vorteil erlaubt die erfindungsgemäße Konstruktion eine Modulbauweise derart, dass Riegel in Zahnersatzteilen mit unterschiedlicher Konfiguration aber in Gehäusen mit gleicher Form und gleichen Abmessungen verwendet werden können, so dass auch bei Verwendung von unterschiedlichen Riegeln die Ausnehmung zur Aufnahme des Gehäuses in dem einen Zahnersatzteil stets mit der gleichen Form und den gleichen Abmessungen hergestellt zu werden braucht. Auf diese Weise lässt sich die Herstellung der Zahnersatzteile in vorteilhafter Weise noch weiter vereinfachen, da nur ein Werkzeug zur Ausbildung der Ausnehmung vorgehalten und eingesetzt zu werden braucht und die Gehäuse mit dem darin beweglich angeordneten Riegel und somit die hiervon gebildeten Befestigungsvorrichtungen entsprechend vorgefertigt und bei Bedarf auf Vorrat gelegt werden können.

Ein weiterer Vorteil der erfindungsgemäßen Lösung besteht darin, dass die Passung für die Aufnahme des Gehäuses in der Ausnehmung des einen Zahnersatzteils sowie für die Aufnahme des Eingriffabschnittes des Riegels In der Ausnehmung des anderen Zahnersatzieils in einem einzigen gemeinsamen Arbeitsschritt, z.B. durch Funkenerosion oder unter Verwendung eines zu verlierenden Platzhalterteils, gleichzeitig in beiden Zahnersatzteilen hergestellt werden kann. Die so hergestellte fluchtende Passung ist als großer Vorteil anzusehen, und zwar unabhängig davon, wie die Schlusspassung des anderen Zahnersatzteils, bei dem es sich gewöhnlich um das sekundäre Zahnersetztell handelt, auf dem einen Zahnersatzteil, bei dem es sich gewöhnlich um das primäre Zahnersatzteil handelt, gebildet wird.

Zweckmäßigerweise wird das Gehäuse mit einer zumindest teilweise zur Form der Ausnehmung komplementären Form und/oder die Ausnehmung mit einer zumindest teilweise zur Form des Gehäuses komplementären Form hergestellt.

Eine in Form und Abmessungen besonders einfach herzustellende Ausnehmung in dem einen Zahnersatzteil lässt sich dadurch realisieren, dass vorzugsweise das Gehäuse im Wesentlichen die Form eines Quaders hat. Dann braucht nämlich auch die zugehörige Ausnehmung zur Aufnahme des Gehäuses lediglich als einfacher quaderförmiger Hohlraum in das zugehörige Zahnersatzteil eingearbeitet zu werden, was einfach zu bewerkstelligen ist und auch nur einfache Werk zeuge erforderlich macht.

Zweckmäßigerweise sollte das Gehäuse mit dem darin beweglich angeordneten Riegel in Bewegungsrichtung des Riegels in die Ausnehmung des Zahnersatzteils durch deren Öffnung eingesetzt werden.

Für den Fall, dass der Riegel als Schwenkriegel ausgebildet ist, ist der Riegel selbstverständlich im Gehäuse schwenkbar gelagert.

In einer bevorzugten Ausführung der Erfindung, bei welcher der Riegel ein Arretierelement aufweist, der den Riegel in seiner geschlossenen Stellung im Wesentlichen arretiert, ist das Arretierelement in Eingriff mit dem Gehäuse bringbar. Demnach findet der Arretiereingriff nicht wie im Stand der Technik mit dem Zahnersatzteil statt, sondern mit dem Gehäuse. Bei dieser Ausführung übernimmt das Gehäuse also nicht nur die bewegliche Lagerung des Riegels, sondern dient zusätzlich auch noch zu dessen Arretierung, so dass sich der Riegel in dem einen Zahnersatz nach Schließung im Mund nicht mehr selbsttätig öffnen kann.

Bei einer bevorzugten Weiterbildung dieser Ausführung, bei welcher das Arretierelement von einem Friktionsabschnitt gebildet ist, der zumindest in der geschlossenen Stellung des Riegels zur Bildung einer der Verstellung entgegenwirkenden Reibungskraft vorgesehen ist, ist der Friktionsabschnitt in Reibeingriff mit dem Gehäuse bringbar. Im Gegensatz zum Stand der Technik wird der Friktionsabschnitt nicht mit dem zugehörigen Zahnersatzteil in Reibeingriff gebracht, sondem die Reibungskraft am Gehäuse erzeugt. Somit übernimmt bei dieser Ausführung das Gehäuse nicht nur die bewegliche Lagerung des Riegels, sondern auch dessen Arretierung in der geschlossenen Stellung durch Reibeingriff mit dem Gehäuse. Der Friktionsabschnitt kann in verschiedener Weise konstruiert sein. Der Friktionsabschnitt kann beispielsweise als Feder oder fedemder Abschnitt des Riegelkörpers ausgebildet sein, wobei die Federkraft etwa quer zur Bewegungsrichtung des Riegels wirkt, wie beispielsweise in der DE 40 29 147 C1 beschrieben ist. Altemativ kann das Friktionselement auch als separates Teil am Riegelköper im Wesentlichen quer zu diesem verschiebbar angeordnet und dabei in jeder Lage fixierbar sein, wozu vorzugsweise eine Madenschraube gemäß der DE 42 09 421 C1 verwendet werden kann.

Schließlich sollte das Gehäuse aus zwei Halbschalen zusammengesetzt sein, wodurch sich ein besonders einfacher Einbau des Riegels realisieren lässt. Wenn die beiden Halbschalen zusammengesetzt werden, wird gleichzeitig oder zuvor der Riegel eingebaut. Gewöhnlich werden die beiden Halbschalen mit Hilfe einer Schweißnaht zu einer kompakten Einheit zusammengefügt, welche dann aus dem Gehäuse und dem darin beweglich angeordneten Riegel besteht.

Nachfolgend wird ein bevorzugtes Ausführungsbeispiel der Erfindung anhand der beiliegenden Figuren näher erläutert. Es zeigen:
- Figur 1: eine Draufsicht auf eine Anordnung aus einem sich in der geöffneten Stellung befindenden Riegel und einem diesen aufnehmenden Gehäuse;
- Figur 2: eine teilweise geschnittene Draufsicht auf die Anordnung von Figur 1, wobei der Riegel sich in seiner geschlossenen Stellung befindet;
- Figur 3: eine teilweise geschnittene Seitenansicht der Anordnung von Figur 2;
- Figur 4: eine um 90° gegenüber der Seitenansicht von Figur 3 gedrehte Seitenansicht der Anordnung von Figur 2; und
- Figur 5: eine auseinandergezogene perspektivische Darstellung der relativen Anordnung des Riegels, des Gehäuses mit dem darin gelagerten Riegel in seiner geöffneten Stellung, des Sekundärteils mit einem das Gehäuse aufnehmenden Durchbruch und des Primärteils mit einer Aussparung für den Eingriff des Riegels, wenn sich dieser in seiner Schließstellung befindet, so dass diese Darstellung den Einbauszustand des den Riegel aufnehmenden Gehäuses im Sekundärteil und die Befestigung des Sekundärteils am Primärteil erkennen lässt.

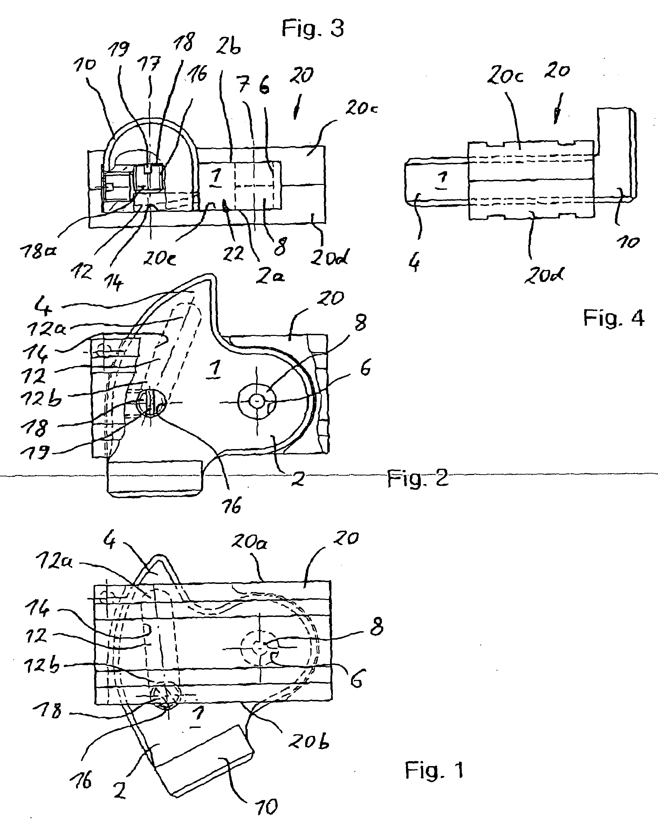

Wie insbesondere die Figuren 1 und 2 erkennen lassen, weist der dort dargestellte Riegel 1 ein Flachteil 2 auf, der eine vorspringende Nase 4 besitzt, die zur eigentlichen Verriegelung an einem Primärteil verwendet wird. Im Flachteil 2 ist im Bereich außerhalb der vorspringenden Nase 4 eine Bohrung 6 ausgebildet, durch die ein Gelenkstift 8 gesteckt ist. Ferner weist der dargestellte Riegel 1 ein wulstartiges Betätigungsteil 10 auf.

An der Unterseite 2a des Flachteils 2 ist ein längliches Reibplätichen 12 vorgesehen, wie insbesondere Figur 3, aber auch die Figuren 1 und 2 erkennen lassen. Das längliche Reibplättchen 12 sitzt in einer entsprechenden Aussparung 14, die an der Unterseite 2a des Flachteils 2 ausgebildet ist und sich von dem wulstartigen Betätigungsteil 10 in die vorspringende Nase 4 hinein erstreckt, wie insbesondere die Figuren 1 und 2 erkennen lassen. Das Reibplättchen 12 ist mit seinem in die Nase 4 des Flachteils 2 hineinragenden Ende 12a am Flachteil 2 angelenkt oder - beispielsweise durch Laserschweißung - befestigt und mit seinem gegenüberliegenden Ende 12b gegenüber dem Flachteil 2 verschwenkbar.

An dem dem wulstartigen Betätigungsteil 10 benachbarten Ende der Aussparung 14 schließt sich eine Gewindebohrung 16 an, die den Boden der Aussparung 14 mit der Oberseite 2b des Flachteils 2 verbindet und mit ihrer Achse 17 parallel zur Achse 7 der Bohrung 6 angeordnet ist (vgl. Figur 3). In der Gewindebohrung 16 sitzt eine Madenschraube 18, deren Länge etwa der Länge der Gewindebohrung 16 und somit der Dicke des Flachteils 2 zwischen dessen Oberseite 2b und der Aussparung 14 entspricht. Die Madenschraube 18 ist in der Gewindebohrung 16 derart angeordnet, dass ihr Kopf mit dem Schlitz 19 zur Oberseite 2b des Flachteils 2 gewandt ist (vgl. Figuren 1 bis 3), während sich das gegenüberliegende freie Ende 18a der Schraube 18 zur Aussparung 14 und somit zu dem darin sitzenden Reibplättchen 12 erstreckt (vgl. Figur 3).

Wie die Figuren ferner erkennen lassen, sitzt der Riegel 1 in einem Gehäuse 20. Dabei ist der Riegel 1 im Gehäuse 20 schwenkbar gelagert, indem an der Innenwandung der Oberseite und der Unterseite des Gehäuses 20 (in den Figuren nicht näher dargestellte) Bohrungen zur Aufnahme des Gelenkstiftes 8 vorgesehen sind, wodurch der Gelenkstift 8 im Gehäuse 20 beidseitig fest montiert ist. An seinen beiden Breitseiten 20a und 20b weist das Gehäuse 20 Öffnungen auf, wodurch an der einen Breitseite 20a des Gehäuses 20 die Nase 4 des Riegels 1 frei liegt und der Riegel 1 mit seiner Nase 4 entsprechend herausgeschwenkt werden kann und an der anderen Breitseite 20b des Gehäuses 20 das wulstartige Betätigungsteil 10 des Riegels 1 außerhalb des Gehäuses 20 angeordnet und somit zugänglich ist. In Figur 3 ist die Öffnung 22 an der Breitseite 20b des Gehäuses 20 erkennbar gezeigt.

Wie die Figuren 3 und 4 erkennen lassen, besteht im dargestellten Ausführungsbeispiel das Gehäuse 20 aus zwei Halbschalen 20c und 20d. Eine solche Konstruktion hat den Vorteil, dass sich der Riegel 1 leicht in das Gehäuse 20 einsetzen lässt.

Der im Gehäuse 20 sitzende Riegel 1 lässt sich um den Gelenkstift 8 zwischen einer geöffneten Stellung gemäß Figur 1 und einer geschlossenen Stellung gemäß Figur 2 verschwenken. Damit in der geschlossenen Stellung zwischen dem Riegel 1 und dem Gehäuse 20 eine ausreichende Reibung, die einer unerwünschten Verstellung entgegenwirkt, und somit eine Arretierung des Riegels 1 erzeugt werden kann, liegt das längliche Reibplättchen 12 mit seiner Außenfläche in eine Reibung erzeugender Anlage an der benachbarten Innenfläche 20e des Gehäuses 20 an. Hierfür gelangt durch Drehen der Schraube 18 in Richtung auf das Reibplättchen 12 das Ende 18a der Schraube 18 in Anlage an die Unterseite des Endes 12b des Reibplättchens 12. Bei Weiterdrehen der Schraube 18 wird das Reibplättchen 12 von dieser mit seinem Ende 12b aus der Unterseite 2a des Flachteils 2 ein wenig herausgedrückt, wobei das Reibplättchen 12 um sein am Flachteil 2 befestigtes Ende 12a entsprechend verschwenkt wird. Das so von der Unterseite 2a des Flachteils 2 abstehende Ende 12b des Reibplättchens 12 wird nun beim Schließen des Riegels 1 in Anlage an die benachbarte Innenfläche 20e des Gehäuses 20 gebracht und durch die Wirkung der Schraube 18 gegen diese Innenfläche 20e gedrückt, wodurch eine der Verstellung des Riegels 1 entgegenwirkende Reibungskraft am Gehäuse 20 erzeugt wird. Durch entsprechendes Verdrehen der Schraube 18 kann diese Reibungskraft präzise eingestellt werden.

Demnach dient die Schraube 18 zur Erzeugung der erforderlichen Reibungskraft und somit als Friktionselement, welches für eine ausreichende Reibung zwischen dem Riegel 1 in seiner geschlossenen Stellung und dem Gehäuse 20 sorgt. Außerdem entfaltet die Schraube 18 auch eine gewisse Federwirkung, sofern sie aus einem elastischen Material besteht, welches beispielsweise auch Metall sein kann.

Alternativ zu der zuvor beschriebenen Ausführung ist es aber auch denkbar, dass das Reibplättchen 12 weggelassen werden kann und die Schraube 18 mit ihrem freien Ende 18a von der Unterseite 2a des Flachteils 2 absteht und direkt in Reibanlage mit der Innenfläche 20e des Gehäuses 20 gebracht werden kann. Auch ist es denkbar, anstelle der Schraube 18 einen in axialer Richtung verschiebbaren Stift oder ein anderes Friktionselement zu verwenden, welches sich mit dem Flachteil 2 des Riegels 1 derart in Eingriff befindet, dass es - wie die Schraube 18 - in Längsrichtung verschiebbar und dabei in jeder Position gegenüber dem Flachteil 2 des Riegels 1 fixierbar ist. Dabei ist es nicht unbedingt notwendig, dass die Bewegungsrichtung des Friktionselementes parallel zur Schwenkachse des Riegels verläuft, sofern sie in einem Winkel zu einer Oberfläche des Flachteils 2 des Riegels 1 gerichtet ist, damit ausreichender Reibdruck auf die Innenfläche 20e des Gehäuses 20 erzeugt werden kann. In diesem Zusammenhang sei noch angemerkt, dass das Friktionselement alternativ auch entsprechend federnd vorgespannt bzw. als Federelement ausgebildet sein kann.

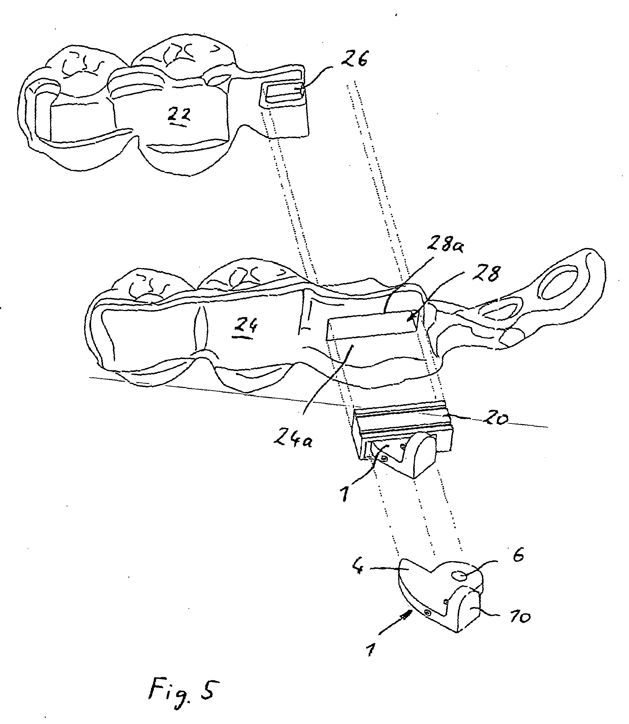

Die zuvor beschriebene Vorrichtung wird zur lösbaren Befestigung von Zahnersatzteilen aneinander verwendet, wie in Figur 5 dargestellt ist. Die Zahnersatzteile können z.B. aus Kronen, Brücken oder (Voll- oder Teil-)Prothesen bestehen, welche gewöhnlich von einem festsitzenden Primärteil 22 und einem abnehmbaren Sekundärteil 24 gebildet werden, die wahlweise aus metallischen oder nichtmetallischen Werkstoffen hergestellt sein können.

Wie Figur 5 erkennen lässt, weist das Primärteil 22 eine Aussparung 26 auf, deren Form im Wesentlichen der Form des vorderen Abschnittes des Flachteils 2 des Riegels 1 mit der Nase 4 entspricht. Das Sekundärteil 24 ist mit einem Durchbruch 28 versehen, durch dessen Öffnung 28a das Gehäuse 20 mit dem darin sitzenden Riegel 1 gesteckt und in dem es dann befestigt wird. Da im dargestellten Ausführungsbeispiel das Gehäuse 20 im Wesentlichen eine Quaderform besitzt, ist der das Gehäuse 20 aufnehmende Durchbruch 28 im Sekundärteil 24 mit einer entsprechenden komplementären Quaderform ausgebildet. Dabei ist der Riegel 1 mit seinem in der Bohrung 6 sitzenden Gelenkstift 8 im Allgemeinen horizontal schwenkbar ausgerichtet. In der geschlossenen Stellung gemäß Figur 2 greift dann der Riegel 1 mit seiner Nase 4 in die zuvor erwähnte Aussparung 26 im Primärteil 22 ein. Hierzu wird das Gehäuse 20 im Durchbruch 28 des Sekundärteils 24 gewöhnlich so angeordnet, dass in der geschlossenen Stellung der Riegel 1 im Allgemeinen bündig mit der Außenseite 24a des Sekundärteils 24 abschließt und lediglich das wulstartige Betätigungsteil 10 ein wenig herausragt, damit es leichter zum Verschwenken des Riegels 1 in die geöffnete Stellung gemäß Figur 1 gegriffen werden kann, in der der Riegel 1 auch in Figur 5 dargestellt ist.

Das in den entsprechenden Durchbruch 28 im Sekundärteil 24 eingesetzte Gehäuse 20 übernimmt demnach sowohl die schwenkbare Lagerung des Riegels 1 um den Gelenkstift 8 (siehe hierzu Figuren 1 und 2) als auch die Arretierung mit Hilfe des Reibplättchens 12 (siehe hierzu Figuren 1 bis 3). Während der Herstellung des Sekundärteils 24 muss der das Gehäuse 20 aufnehmende Durchbruch 28 lediglich so eingearbeitet werden, dass er eine entsprechende Quaderform erhält. Dies lässt sich auf einfache Weise bewerkstelligen. Hierbei ist nur darauf zu achten, dass der Durchbruch 28 die gewünschte Ausrichtung erhält, damit nach Einsetzen des Gehäuses 20 der darin gelagerte Riegel 1 in seiner geschlossenen Stellung gemäß Figur 2 mit seiner Nase 4 in die entsprechende Aussparung 26 im Primärteil 22 passgenau eingreifen kann.

Demnach bildet das Gehäuse 20 mit dem darin schwenkbar gelagerten Riegel 1 eine kompakte Baueinheit. Falls nach längerer Tragzeit im Mund ein Verschleiß am Riegel 1 und insbesondere an dessen Nase 4 auftreten sollte, wird die Einheit aus Gehäuse 20 und Riegel 1 aus dem Sekundärteil 24 entfernt und gegen eine neue Einheit aus Gehäuse 20 und Riegel 1 ersetzt. Dies erfolgt ohne Nacharbeit, was im Stand der Technik bislang nicht möglich war.

## Patentansprüche

1. Vorrichtung zur lösbaren Befestigung von Zahnersatzteilen (22, 24) aneinander, mit einem Riegel (1), der für eine bewegliche Lagerung in einer in dem einen Zahnersatzteil (24) ausgebildeten Ausnehmung (28), welche eine Öffnung (28a) nach außen aufweist, und in einer geschlossenen Stellung für den Eingriff in eine in dem anderen Zahnersatzteil (22) ausgebildete Ausnehmung (26) vorgesehen ist,
**dadurch gekennzeichnet, dass** der Riegel (1) zumindest teilweise in einem zum Einsetzen in die Ausnehmung (28) des einen Zahnersatzteils (24) durch deren Öffnung (28a) ausgebildeten und in Bewegungsrichtung des Riegels (1) zumindest abschnittsweise offenen Gehäuse (20) angeordnet und dabei in diesem beweglich gelagert ist.

2. Vorrichtung nach Anspruch 1,
**dadurch gekennzeichnet, dass** das Gehäuse (20) eine Form besitzt, die ein Einsetzen des Gehäuses (20) in die Ausnehmung (28) in dem einen Zahnersatzteil (24) erlaubt.

3. Vorrichtung nach Anspruch 1 oder 2,
**dadurch gekennzeichnet, dass** das Gehäuse (20) eine zumindest teilweise zur Form der Ausnehmung (28) in dem einen Zahnersatzteil (24) komplementäre Form hat.

4. Vorrichtung nach mindestens einem der vorangegangenen Ansprüche,
**dadurch gekennzeichnet, dass** das Gehäuse (20) im Wesentlichen die Form eines Quaders hat.

5. Vorrichtung nach mindestens einem der vorangegangenen Ansprüche,
**dadurch gekennzeichnet, dass** der Riegel (1) im Gehäuse (20) schwenkbar (8) gelagert ist.

6. Vorrichtung nach mindestens einem der vorangegangenen Ansprüche, bei welcher der Riegel (1) ein Arretierelement (12, 16) aufweist, der den Riegel (1) in seiner geschlossenen Stellung im Wesentlichen arretiert,
**dadurch gekennzeichnet, dass** das Arretierelement (12, 16) in Eingriff mit dem Gehäuse (20) bringbar ist.

7. Vorrichtung nach Anspruch 6, bei welcher das Arretierelement von einem Friktionsabschnitt (12, 18) gebildet ist, der zumindest in der geschlossenen Stellung des Riegels (1) zur Bildung einer der Verstellung entgegenwirkenden Reibungskraft vorgesehen ist,
**dadurch gekennzeichnet, dass** der Friktionsabschnitt (12, 18) in Reibeingriff mit dem Gehäuse (20) bringbar ist.

8. Vorrichtung nach mindestens einem der vorangegangenen Ansprüche,
**dadurch gekennzeichnet, dass** das Gehäuse (20) aus zwei Halbschalen (20c, 20d) zusammengesetzt ist.

9. Zahnersatzteil (24) mit einer eine Öffnung (28a) nach außen aufweisenden Ausnehmung (28) und einer Vorrichtung nach mindestens einem der vorangegangenen Ansprüche,
**dadurch gekennzeichnet, dass** das Gehäuse (20) mit dem darin beweglich angeordneten Riegel (1) in die Ausnehmung (28) durch deren Öffnung (28a) eingesetzt ist.

10. Verfahren zur Montage eines Riegels (1) an einem Zahnersatzteil (24), wobei der Riegel (1) zur lösbaren Befestigung dieses Zahnersatzteils (24) an einem anderen Zahnersatzteil (22) zwischen einer geöffneten Stellung und einer geschlossenen Stellung, in der er in eine in dem anderen Zahnersatzteil (22) ausgebildete Ausnehmung (28) eingreift, bewegbar angeordnet ist,
**gekennzeichnet durch** die Schritte,
- den Riegel (1) in einem in Bewegungsrichtung des Riegels (1) zumindest abschnittsweise offenen Gehäuse (20) beweglich anzuordnen,
- im Zahnersatzteil (24) eine Ausnehmung (28) auszubilden, die eine Öffnung (28a) nach außen aufweist, und
- das Gehäuse (20) mit dem darin beweglich angeordneten Riegel (1) in die Ausnehmung (28) des Zahnersatzteils (24) **durch** deren Öffnung (28a) einzusetzen.

11. Verfahren nach Anspruch 10,
**dadurch gekennzeichnet, dass** das Gehäuse (20) und/oder die Ausnehmung (28) im Zahnersatzteil (24) mit einer Form hergestellt wird, die ein Einsetzen des Gehäuses (20) in die Ausnehmung (28) erlaubt.

12. Verfahren nach Anspruch 10 oder 11,
**dadurch gekennzeichnet, dass** das Gehäuse (20) mit einer zumindest teilweise zur Form der Ausnehmung (28) komplementären Form und/oder die Ausnehmung (28) mit einer zumindest teilweise zur Form des Gehäuses (20) komplementären Form hergestellt wird.

13. Verfahren nach mindestens einem der Ansprüche 10 bis 12,
**dadurch gekennzeichnet, dass** das Gehäuse (20) und die Ausnehmung (28) quaderförmig ausgebildet werden.

14. Verfahren nach mindestens einem der Ansprüche 10 bis 13,
**dadurch gekennzeichnet, dass** das Gehäuse (20) mit dem darin beweglich angeordneten Riegel (1) in Bewegungsrichtung des Riegels (1) in die Ausnehmung (28) des Zahnersatzteils (24) durch deren Öffnung (28a) eingesetzt wird.

15. Verfahren nach mindestens einem der Ansprüche 10 bis 14.
**dadurch gekennzeichnet, dass** der Riegel (1) im Gehäuse (20) schwenkbar (8) gelagert wird.

16. Verfahren nach mindestens einem der Ansprüche 10 bis 15, bei welchem der Riegel (1) mit einem Arretierelement (12, 16) zur Arretierung des Riegels (1) in seiner geschlossenen Stellung versehen wird,
**dadurch gekennzeichnet, dass** das Arretierelement (12, 16) in Eingriff mit dem Gehäuse (20) gebracht wird.

17. Verfahren nach Anspruch 16, bei welchem das Arretierelement als Friktionsabschnitt (12, 18) zur Bildung einer der Verstellung entgegenwirkenden Reibungskraft ausgebildet wird,
**dadurch gekennzeichnet, dass** der Friktionsabschnitt (12, 18) in Reibeingriff mit dem Gehäuse (20) gebracht wird.

18. Verfahren nach mindestens einem der Ansprüche 10 bis 17,
**dadurch gekennzeichnet, dass** zur Bildung des Gehäuses (20) zwei Halbschalen (20c, 20d) hergestellt werden und während des Zusammenfügens der beiden Halbschalen (20c, 20d) der Riegel (1) zwischen diesen angeordnet wird, um das Gehäuse (20) mit dem darin beweglich gelagerten Riegel (1) herzustellen.
